# EUROPÄISCHE PATENTSCHRIFT

(11) **EP 0 542 092 B1**
(45) Veröffentlichungstag und Bekanntmachung des Hinweises auf die Patenterteilung: **24.04.1996**
(21) Anmeldenummer: 92118772.0
(22) Anmeldetag: 02.11.1992
(51) Int. Cl.: A61C 17/06

(54) **Vorrichtung zum Abscheiden von Feststoffpartikeln aus dem Schmutzwasser einer zahnärztlichen Einrichtung**
Device for separating solid particles from waste water in a dental apparatus
Dispositif pour séparer des particules solides d'eau usée dans un appareil dentaire

(30) Priorität: 13.11.1991 DE 4137347
(43) Veröffentlichungstag der Anmeldung: 19.05.1993
(73) Patentinhaber: SIEMENS AKTIENGESELLSCHAFT, D-80333 München (DE)
(72) Erfinder: Franetzki, Manfred, Dr., W-6140 Bensheim (DE); Plötz, Josef, Dr., W-6140 Bensheim (DE)

(56) Entgegenhaltungen:
- EP-A- 0 284 641
- EP-A- 0 407 255
- DD-A- 0 210 387
- DE-B- 2 459 881
- DE-U- 8 236 368
- US-A- 1 602 343
- US-A- 3 012 323

## Beschreibung

Die Erfindung bezieht sich auf eine Vorrichtung zum Abscheiden von Feststoffpartikeln aus dem Schmutzwasser einer zahnärztlichen Einrichtung, mit einem Filter und einem Sammelbehälter, durch die das Schmutzwasser geleitet wird. Eine derartige Vorrichtung ist allgemein bekannt.

Den gesetzlichen Vorschriften entsprechend müssen aus dem Abwasser von Dentalgeräten insbesondere Quecksilberverbindungen (Amalgam) weitgehend abgeschieden und entsprechend entsorgt werden.

Bekannt sind hierzu Absaugeinrichtungen, bei denen das Schmutzwasser, bevor es in den Abfluß eingeleitet wird, einen Syphon passiert, in den sich die Feststoffpartikel aufgrund der Schwerkraft absetzen können (DE-24 59 881). Des weiteren ist es bekannt, die Feststoffpartikel mittels einer Pumpe durch einen syphonartigen Sammelbehälter zu drücken. Der Sammelbehälter enthält mehrere Filtereinsätze, durch die das Schmutzwasser von unten her strömt (DE-32 31 272).

Aus der EP-0 407 255 ist eine Filtereinrichtung mit einem regenerierbaren Dauerfilter bekannt, bei der die Reinigung des Filters automatisch erfolgt, indem in bestimmten Zyklen ein unterhalb des Filters in einem Sammelbehälter angeordneter Ultraschallerzeuger aktiviert wird, wobei die durch Ultraschall vom Filter abgelösten und am Behälterboden sich ansammelnden Partikel über einen Abflußkanal aus dem Behälter abgeleitet werden.

Der im Patentanspruch 1 angegebenen Erfindung liegt die Aufgabe zugrunde, eine Vorrichtung der eingangs genannten Gattung anzugeben, mit der sich in effizienterer Weise als bisher, insbesondere unter Vermeidung eines häufigen Filterwechsels, Feststoffpartikel in einem sehr hohen Abscheidegrad zurückhalten lassen. Die Abscheidevorrichtung soll klein und kostengünstig herzustellen und besonders effizient zu handhaben sein.

Gemäß der Erfindung wird ein regenerierbares Dauerfilter vorgeschlagen, welches in Verbindung mit einer Rückspüleinrichtung eine relativ lange Standzeit aufweist. Mit der Rückspüleinrichtung wird bei einem bestimmten Grad der Beaufschlagung des Filters mit Feststoffpartikeln oder bei Erfüllung anderer Kriterien ein Gegenstrom erzeugt, der die angesammelten Teilchen vom Filter loslöst. Die losgelösten Teile können sich anschließend durch Sedimentation in einem Behälter niederschlagen. Eine weitere Verbesserung, insbesondere der Effizienz des Flüssigkeitsdurchsatzes, läßt sich erzielen, wenn zusätzliche Druckmittel in Form einer Flüssigkeitsdruckpumpe oder einer Druckluftquelle eingesetzt werden, welche das Schmutzwasser mit erhöhtem Druck durch das Filter drücken. Die Rückspüleinrichtung kann vorteilhafterweise durch einen Ultraschallgenerator ergänzt werden, der bei einer bestimmten Beaufschlagung des Filters mit Feststoffpartikeln oder aufgrund anderer Kriterien aktiviert wird und das Loslösen der Partikel vom Filter unterstützt.

Bei der Anordnung des Filters wird davon ausgegangen, daß die abzuscheidenden Feststoffpartikel, insbesondere Amalgam, über Absaugkanülen sowie über eine Speischale anfallen und daß das abgesaugte Gemisch aus Flüssigkeit, Feststoffpartikeln und Luft zunächst in einem Separiergefäß von der Luft getrennt wird. Das Filter wird nach Zusammenführen der Leitungen aus Speibecken und Separiergefäß in die Abflußleitung eingeschaltet und das Filtrat in bisheriger Weise in den Abfluß geleitet.

Weitere Vorteile und Ausgestaltungen der Erfindung ergeben sich aus den Unteransprüchen sowie aus der nachfolgenden Beschreibung von Ausführungsbeispielen.

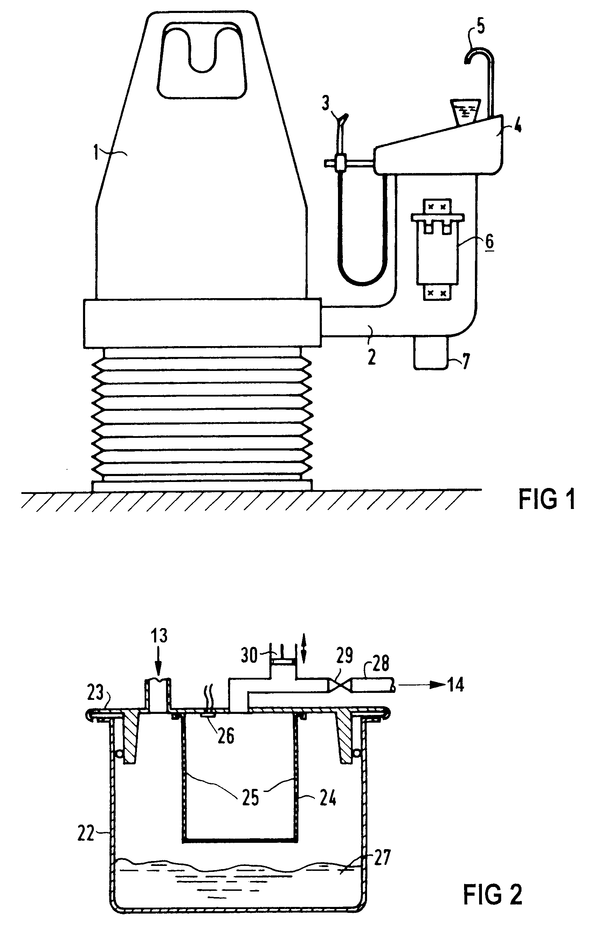

Die Figur 1 zeigt einen zahnärztlichen Arbeitsplatz mit einem Patientenstuhl 1, an dem seitlich eine Wassereinheit 2 befestigt ist, die eine Absaugeinrichtung 3, ein Speibecken 4 sowie eine Mundglasfülleinrichtung 5 enthält. Das von diesen Einrichtungen anfallende Schmutzwasser gelangt nach der üblichen Trennung von Luft und Wasser in eine Abscheidevorrichtung 6, in der die angefallenen Feststoffpartikel, insbesondere Amalgam, Gold, od.dgl., abgeschieden werden. Das Filtrat wird anschließend über einen bodenseitig angeordneten Syphon 7 in bekannter Weise in das Abwassernetz geleitet.

Die Abscheidevorrichtung 6 ist vorteilhafterweise seitlich der Wassereinheit 2 gehaltert oder auch in deren Gehäuse integriert, und zwar so, daß, wie nachfolgend noch näher erläutert, das Filter, in dem sich die Feststoffpartikel ansammeln, leicht ausgetauscht werden kann.

Die Figur 2 zeigt eine Ausführungsform der Abscheidevorrichtung 6 mit einem regenerierbaren Filter. Ein Sammelbehälter 22 ist mit einem leicht lösbaren Deckel 23 versehen, der Zu- und Abflußleitungen 13 und 14 beinhaltet. Am Deckel ist ein in den Behälter ragendes topfförmiges Filter 24 befestigt.

Das Ablösen der sich an den Innenwandungen des Filters 24 ansetzenden Partikel erfolgt durch einen Gegenstrom. Hierzu kann mit Vorteil im Abflußkanal 28 ein Sperrventil 29 und zwischen Behälter und Sperrventil ein Verdrängungskolben 30 vorgesehen sein. Während das Sperrventil 29 in regelmäßigen Abständen geschlossen wird, wird durch den Verdrängungskolben 30 ein Druck gegen die Innenwandung 25 des Filters 24 erzeugt, so daß Flüssigkeit in umgekehrter Richtung durch das Filter strömt, wodurch ein Ablösen der Partikel an der Außenwandung bewirkt wird. In besonders einfacher Weise kann dies durch Abquetschen eines flexiblen Schlauches, der im Abschnitt zwischen Behälter und Sperrventil 29 vorgesehen ist, erreicht werden. Wenn der Schlauch zweistufig, d.h. nacheinander an verschiedenen Stellen (und zwar zuerst an der vom Filter 24 weiter entfernt liegenden Stelle) abgequetscht wird, läßt sich sowohl eine Ventil- als auch eine Verdrängungsfunktion erzielen, wodurch das Sperrventil 29 entfallen kann.

Der Gegenstrom ist auch durch kurzes Zuschalten von Druckluft oder Druckwasser (Netzwasser) möglich.

Das Ablösen kann durch Ultraschall unterstützt werden. Hierzu kann in dem Raum, der durch Deckel und Innenwandungen 25 des Filters begrenzt ist, ein Ultraschallgeber 26 angeordnet sein, der bei einem bestimmten Grad der Beaufschlagung der äußeren Filterwandungen mit Feststoffpartikeln bei Aktivierung die Ablösung angesetzter Feststoffpartikel, wie beschrieben, unterstützt. Die sich ablösenden Partikel können sich in einem bodenseitig vorgesehenen Bevorratungsraum 27 des Behälters absetzen. Vorteilhafterweise werden Behälter 22 und Deckel 23 so gestaltet, daß die vom Zulauf kommende Flüssigkeitsströmung die im Sumpf 27 abgesetzten Partikel nicht wieder aufwirbelt.

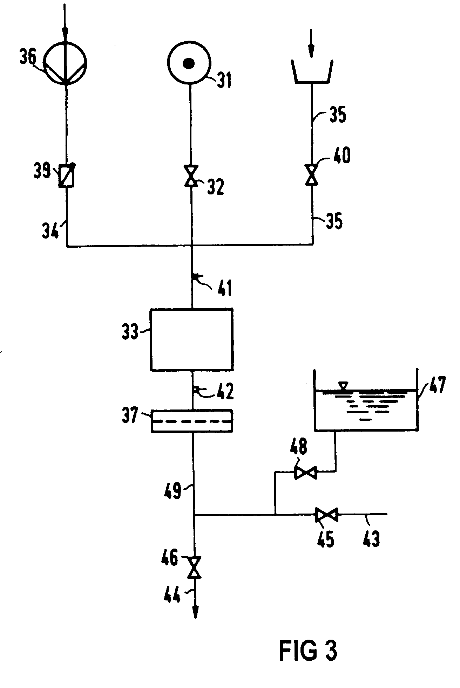

Die Figur 3 zeigt eine Ausführungsform, bei der, um den Durchsatz des Schmutzwassers durch das Filter zu erhöhen und damit den Ablauf der Abscheidung effizienter zu machen, ein zusätzliches Druckmedium, vorzugsweise Druckluft, aus einer Druckmittelquelle 31 nach Aktivierung eines Ventils 32 auf einen Behälter 33 gegeben wird, in den einerseits der Abwasserkanal 34 aus einer Absauganlage und andererseits der Abwasserkanal 35 aus einer Speischale einmünden. Das einerseits aus der Speischale kommende und das andererseits zur Überwindung des Unterdrucks im Separiergefäß mittels einer Förderpumpe 36 in den Abwasserkanal 34 geleitete Schmutzwasser wird mit erhöhtem Druck durch den Behälter 33 und das nachfolgende Filter 37 gedrückt. Während der Beaufschlagung des Schmutzwassers mit Druckmedium, also bei geöffnetem Ventil 32, ist der Zulauf der Kanäle 34, 35 durch entsprechende Absperrventile, z.B. Rückschlagventile 39, 40, verschlossen.

Um eine einwandfreie Abscheidefunktion sicherzustellen, muß gewährleistet sein, daß das Filter 37 funktionsfähig ist, d.h. es muß sichergestellt sein, daß Filterpapier oder - gewebe eingelegt ist und daß dieses nicht beschädigt und auch nicht verstopft ist. Um diese Bedingungen zu erfüllen, ist eine Überwachungseinrichtung vorgesehen, mit deren Hilfe die Anlage in regelmäßigen Abständen, z.B. nach Einschalten des Arbeitsplatzes bei abgeschalteter Sauganlage, überprüft wird. Hierzu sind entsprechende Sensoren 41, 42 vorhanden. Bei gefülltem Behälter 33 spricht der Sensor 41 (Druck- oder Flüssigkeitssensor) an, wodurch die Ventile 39 und 40 geschlossen werden. Der Behälter wird sodann durch Öffnen des Ventils 32 mit Druckmedium beaufschlagt, wodurch das in ihm enthaltene Schmutzwasser mit erhöhtem Druck (z.B. ca. 3 bar) durch das Filter 37 gepreßt wird. Sobald der Wasserpegel unter ein bestimmtes Niveau fällt, spricht der Sensor 42 an, wodurch eine Umschaltung auf Sammelbetrieb erfolgt, d.h. das Ventil 32 schließt und die beiden Ventile 39, 40 öffnen, wodurch sich der Behälter 33 wieder füllen und der Zyklus von neuem beginnen kann.

Eine Verstopfung des Filters 37 sowie eine Beschädigung oder das Fehlen desselben werden durch die Verlängerung oder Verkürzung der Zeit, die zum Leerdrücken des Behälters 33 benötigt wird, also der Zeit zwischen Öffnen des Ventils 32 und Unterschreiten der Schwelle des Sensors 42, erkannt. Dies gilt sinngemäß auch für die Ausführungsform ohne zusätzliche Druckmittel. Eine Verstopfung des Filters wird dann dadurch erkannt, daß bei laufendem Betrieb, also bei laufender Förderpumpe 36, der Sensor 41 anspricht (oder der Sensor 42 einen höheren Druck meldet) oder daß bei der gezielten Überprüfung nach einer gewissen Zeit nach Zugabe einer bestimmten Menge Wasser dieses noch nicht abgelaufen und somit das Signal des Sensors 42 noch nicht abgeklungen ist.

Auch bei dieser Ausführungsform ist zur Filterreinigung bzw. Regenerierung eine Rückspülung vorgesehen, indem über eine Leitung 43 vorzugsweise Druckluft (oder auch Druckwasser) in den Abschnitt 49 der Abflußleitung 44 gedrückt wird, die dann das Filter 37 durch Rückspülung reinigt. In diesem Falle sind entsprechende Ventile 45, 46 in der Abfluß- und in der Druckmediumzufuhrleitung vorzusehen.

Als weitere Option ist bei dieser Ausführungsform eine Maßnahme vorgesehen, um Desinfektionsmittel in das Abwassersystem, insbesondere in den Bereich des Filters zu bringen. Hierzu wird aus einem mit Desinfektionsmittel gefülltem Behälter 47 über ein Ventil 48 Desinfektionsmittel in dosierter Menge in den Leitungsabschnitt 49 der Abflußleitung 44 geleitet, und zwar vorzugsweise dann, wenn eine Rückspülung eingeleitet wird. Mit dieser Maßnahme kann vermieden werden, daß die Filterporen durch Besiedelung mit Mikroorganismen vorzeitig verstopft werden. Des weiteren lassen sich mit Vorteil üble Gerüche vermeiden, die bei solchen Anlagen zwangsläufig auftreten.

Die Funktionsweise ist folgende: Während der Filtration sind die Ventile 45 und 48 geschlossen, das Ventil 46 ist dagegen offen. Zum Rückspülen mit Intensivdesinfektion wird nach Ablaufen des Abwassers in den Abfluß das Ventil 46 geschlossen, dann die gewünschte Menge Desinfektionsmittel über das Ventil 48 abgegeben und dieses anschließend wieder geschlossen. Nach Öffnen des Ventils 45 wird das Filter rückgespült, wobei sich Rückspülwasser und Desinfektionsmittel vermischen. Nach erfolgter Rückspülung wird das Ventil 45 geschlossen und das desinfektionsmittelhaltige Wasser im System stehengelassen. Das Ventil 46 wird erst wieder geöffnet, wenn erneut filtriert werden soll.

Die zusätzliche Beaufschlagung des Schmutzwassers mit Druckmedium hat den Vorteil, daß bei einer entsprechend schnellen Steuerung das Wasserreservoir des Behälters sehr klein gehalten werden kann. Wie in Abbildung 2 gezeigt, kann das Wasserreservoir gleichzeitig als Sedimentationsgefäß ausgebildet sein und als integralen Bestandteil auch das Filter aufnehmen. Das Anströmen des Filters von unten hat den Vorteil, daß die Standzeit der Abscheideanlage erheblich verlängert wird, weil nicht fest anhaftende Partikel sofort in das Sedimentationsgefäß zurückfallen bzw. zurückgespült werden. Bei entsprechend hohem Filtrationsdruck, also Beaufschlagung mit dem Druckmedium, kann bei relativ kleiner Filteroberfläche ein relativ hoher Wasserdurchfluß erzielt werden.

In den nachfolgenden Figuren werden Möglichkeiten beschrieben, um das Filter auf erhöhte Partikelabgabe (Partikeldurchbruch) zu überprüfen. Bei Filtern, die nicht nur rein mechanisch als Sieb wirken, bei denen vielmehr auch Adsorptionseffekte in der Tiefe der Porenstruktur eine Rolle spielen, z.B. bei Papierfiltern und Volumenfiltern mit einer Fasermatrix aus Kunststoff, besteht prinzipiell die Gefahr eines Partikeldurchbruchs, d.h. einer erhöhten Partikelabgabe ins Filtrat. Dies ist insbesondere bei Druckstößen, wie in den beiden zuvor beschriebenen Ausführungsformen vorgesehen, der Fall. Auch Gewebefilter mit gegeneinander verschiebbaren Fäden sind davon betroffen. Falls man solche Partikeldurchbrüche nicht durch konstruktive Maßnahmen völlig ausschließen kann, ist es notwendig, das abfließende Filtrat mittels einer geeigneten Sensorik zu überwachen.

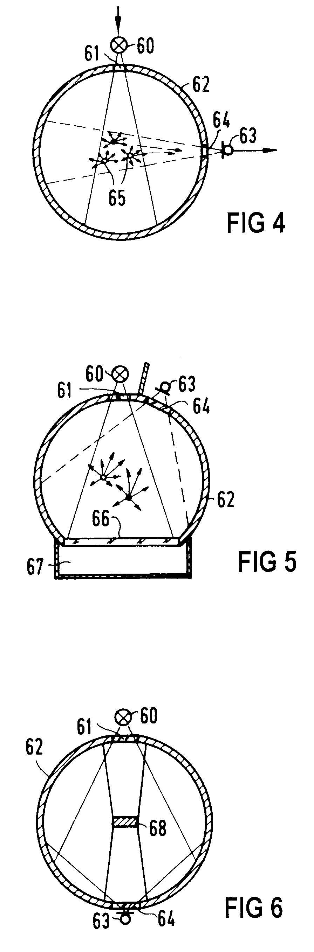

Die Figuren 4 bis 6 zeigen mögliche technische Lösungen hierfür. Dargestellt ist jeweils ein Abflußrohr im Bereich des Filtrats im Querschnitt. Gemäß Figur 4 wird von einer Lichtquelle 60, z.B. einer LED- oder einer Laserdiode, über ein optisches Fenster 61 Licht in das Innere eines im Querschnitt dargestellten Abflußrohres 62 geworfen. Die Rohrinnenwand ist zweckmäßigerweise lichtabsorbierend ausgestaltet bzw. beschichtet. In einem bestimmten Winkel zur Lichtquelle 60 ist ein Lichtdetektor 63, z.B. in Form einer Fotodiode, vorgesehen, der ebenfalls über ein optisches Fenster 64 Streulicht von Feststoffpartikeln 65 auffängt. Lichtquelle und Detektor sind so angeordnet, daß bei nicht vorhandenen Partikeln möglichst wenig Licht auf den Detektor fällt, so daß bei vorhandenen Partikeln das dabei entstehende Streulicht vom Detektor erfaßt und ein entsprechendes Signal gebildet wird.

Figur 5 zeigt eine vorteilhafte Ausgestaltung, bei der Lichtquelle 60 und Lichtdetektor 63 dicht nebeneinander angeordnet sind, so daß der Detektor bei Anwesenheit von Partikeln ein stärkeres Signal empfängt. Gegenüber der Lichtquelle 60 ist ein optisches Fenster 66 mit einer dahinter angeordneten 'Strahlenfalle' 67 angeordnet. Das optische Fenster weist vorzugsweise eine Brechzahl auf, die ähnlich der von Wasser ist. Die Strahlenfalle 67, die beispielsweise aus einer Kammer mit stark absorbierendem Medium (Farbstofflösung) bestehen kann, dient dazu, störende Lichtreflexe von der Rohrinnenwand zu minimieren.

In der in Figur 6 dargestellten weiteren Ausführungsform sind Lichtquelle 60 und Detektor 63 einander gegenüberliegend angeordnet. Dazwischen ist eine lichtundurchlässige Abschirmung 68 eingebracht, die den Lichtdetektor vor Direktlicht schützt.

## Patentansprüche

1. Vorrichtung zum Abscheiden von Feststoffpartikeln aus dem Schmutzwasser einer zahnärztlichen Absaugeinrichtung, mit einem Sammelbehälter (22, 33) und einem Filter (24, 37), durch die das Schmutzwasser geleitet wird **dadurch gekennzeichnet,** daß das Filter (24, 37) als regenerierbares Dauerfilter ausgebildet ist, welches zwischen Zulaufkanal des Sammelbehälters (27, 33) und dem Abflußkanal (28, 44) angeordnet ist, wobei zur Regeneration des Filters filtratseitig im Abflußkanal (28, 44) ein Sperrorgan (29, 46) angeordnet ist, mit welchem bei Aktivierung der Querschnitt des Abflußkanals verschließbar ist, und daß Druckmittel (30, 43) vorgesehen sind, welche bei Aktivierung eine Ablösung der an den zuflußseitigen Wandungen des Filters angesetzten Feststoffpartikeln bewirken, indem bei geschlossenem Sperrorgan die filtratseitigen Wandungen (25) des Filters (24, 37) kurzzeitig mit einem Gegenstrom beaufschlagt werden.

2. Vorrichtung nach Anspruch 1, **dadurch gekennzeichnet,** daß das Filter (24) im Sammelbehälter (22) angeordnet ist, welcher einen Auffangraum (27) für die abgelösten Partikel enthält, daß das Filter außenseitig mit Schmutzwasser beaufschlagt wird und daß ein unterer Abschnitt des Sammelbehälters (22) mit dem Behälterboden den Auffangraum (27) für die Feststoffpartikel bildet.

3. Vorrichtung nach Anspruch 2, **dadurch gekennzeichnet,** daß in dem durch die Innenwandungen (25) des Filters (24) und einem Deckel (23) des Sammelbehälters (22) begrenzten Raum, vorzugsweise am Deckel (23) selbst, ein Ultraschall-Generator (26) angeordnet ist, der bei einer bestimmten Beaufschlagung des Filters mit Feststoffpartikeln aktiviert wird.

4. Vorrichtung nach Anspruch 1, **dadurch gekennzeichnet,** daß als Sperrorgan (29) und/oder Druckmittel (30) ein quetschbarer Schlauch vorgesehen ist, der zumindest einen Teil des Abflußkanals (28) bildet und der Schlauch zweistufig quetschbar ist, wobei in der ersten Stufe eine Absperrung des Abflußkanals (28) und in der zweiten Stufe der Gegenstrom erzielt wird.

5. Vorrichtung nach einem der Ansprüche 1 oder 4, **dadurch gekennzeichnet,** daß im Leitungsabschnitt des Gegenstromes Mittel (47, 48) zur Zudosierung eines Desinfektionsmittels vorgesehen sind.

6. Vorrichtung nach einem der Ansprüche 1 bis 5, **dadurch gekennzeichnet,** daß in den Leitungswegen des Schmutzwassers vor Eintritt in den Filter (24, 37) zusätzliche Druckmittel (31, 32) vorhanden sind, mit welchen eine Druckerhöhung des durchfließenden Schmutzwassers bewirkt wird.

7. Vorrichtung nach Anspruch 6, **dadurch gekennzeichnet,** daß eine oder mehrere, eine Druckerhöhung und/oder das Vorhandensein von Flüssigkeit meldende Sensoren (41, 42; 58, 59) vorgesehen sind, die bei einem vorgegebenen Wert, der einem Grenzwert für eine minimale Durchlässigkeit des Filters entspricht, zumindest ein Anzeigesignal liefern.

8. Vorrichtung nach Anspruch 7, **dadurch gekennzeichnet,** daß in dem Leitungskanal zwischen der Schmutzwasserquelle und dem Filter (37) ein Steuerraum (33) vorgesehen ist, der ein bestimmtes Volumen an durchströmendem Schmutzwasser aufnimmt und daß die Sensoren (41, 42) ein bei gefülltem Steuerraum (33) den Zulauf von Schmutzwasser unterbrechendes Ventil (39, 40) und ein den Steuerraum mit einem Druckmedium, vorzugsweise mit Druckluft, beaufschlagendes Ventil (32) aktivieren.

9. Vorrichtung nach Anspruch 8, **dadurch gekennzeichnet,** daß der Steuerraum durch einen Sedimentationsbehälter gebildet ist, der Mittel zur Beruhigung des ein strömenden Schmutzwassers und Absetzung der Feststoffpartikel durch Schwerkraft enthält.

10. Vorrichtung nach einem der Ansprüche 1 bis 9, **dadurch gekennzeichnet,** daß im Leitungskanal zwischen Filter (24, 37) und Abfluß (14, 44) eine das Einströmen von Feststoffpartikeln in das Filtrat erfassende Sensoreinrichtung (60 bis 68) vorhanden ist.

11. Vorrichtung nach Anspruch 10, **dadurch gekennzeichnet,** daß die Sensoreinrichtung eine Lichtquelle (60) enthält, mit der in dem zu überwachenden Leitungskanal (62) ein definierter Bereich ausleuchtbar ist, daß weiterhin im Leitungskanal (62) ein Lichtdetektor (63) vorgesehen ist, welcher von den im ausgeleuchteten Bereich befindlichen Partikeln ausgehendes Streulicht erfaßt, wobei die dabei gebildeten Signale einer Auswerteeinrichtung zugeführt werden.

## Claims

1. Device for separating solid particles from the waste water of a dental suction device, having a collecting container (22, 33) and a filter (24, 37), through which the waste water is conducted, characterized in that the filter (24, 37) is constructed as a permanent filter which can be regenerated and which is arranged between the supply channel of the collecting container (27, 33) and the drain channel (28, 44), wherein to regenerate the filter there is arranged on the filtrate side in the drain channel (28, 44) a blocking element (29, 46) with which, upon activation, the cross section of the drain channel can be closed, and in that pressure means (30, 43) are provided, which, upon activation, effect a loosening of the solid particles which have settled on the inflow-side walls of the filter, in that when the blocking element is closed the filtrate-side walls (25) of the filter (24, 37) are briefly loaded with a counterflow.

2. Device according to claim 1, characterized in that the filter (24) is arranged in the collecting container (22) which contains a catch area (27) for the loosened particles, in that the filter is loaded externally with waste water and in that a lower section of the collecting container (22) forms with the container floor the catch area (27) for the solid particles.

3. Device according to claim 2, characterized in that in the area limited by the inner walls (25) of the filter (24) and a cover (23) of the collecting container (22), preferably on the cover (23) itself, an ultrasound generator (26) is arranged, which is activated upon a certain loading of the filter with solid particles.

4. Device according to claim 1, characterized in that a tube which can be squeezed is provided as blocking element (29) and/or pressure means (30), which tube forms at least a part of the drain channel (28) and the tube can be squeezed in two stages, with a blocking of the drain channel (28) being attained in the first stage and the counterflow being attained in the second stage.

5. Device according to one of claims 1 or 4, characterized in that means (47, 48) for adding a disinfectant are provided in the conduit section of the counterflow.

6. Device according to one of claims 1 to 5, characterized in that in the conduit paths of the waste water before entry into the filter (24, 37) additional pressure means (31, 32) are present, with which a pressure increase of the waste water flowing through is effected.

7. Device according to claim 6, characterized in that one or more sensors (41, 42; 58, 59) indicating a pressure increase and/or the presence of liquid are provided, which, at a specified value which corresponds to a limiting value for a minimum level of permeability of the filter, supply at least one indicator signal.

8. Device according to claim 7, characterized in that in the conduit channel between the waste-water source and the filter (37) a control area (33) is provided, which accommodates a certain volume of waste water flowing through and in that the sensors (41, 42) activate a valve (39, 40) interrupting the supply of waste water when the control area (33) is filled and a valve (32) loading the control area with a pressure medium, preferably with compressed air.

9. Device according to claim 8, characterized in that the control area is formed by a sedimentation container which contains means for calming the waste water flowing in and for settling the solid particles by gravity.

10. Device according to one of claims 1 to 9, characterized in that in the conduit channel between the filter (24, 37) and drain (14, 44) there is a sensor device (60 to 68) which detects the flowing of solid particles into the filtrate.

11. Device according to claim 10, characterized in that the sensor device contains a light source (60) with which a defined area in the conduit channel (62) to be monitored can be illuminated, in that, furthermore, a light detector (63) is provided in the conduit channel (62), which light detector (63) detects scattered light issuing from the particles located in the illuminated area, with the signals formed in this respect being supplied to an evaluation device.

## Revendications

1. Dispositif pour séparer des particules de substances solides de l'eau polluée d'un dispositif d'aspiration dentaire, comportant un récipient de collecte (22,33) et un filtre (24,37), que traverse l'eau polluée, caractérisé par le fait que le filtre (24,37) est agencé sous la forme d'un filtre permanent régénérable, qui est disposé entre le canal d'entrée du récipient de collecte (27,33) et le canal d'évacuation (28,44), un organe d'arrêt (29,46), par lequel, lors de l'activation, la section transversale du canal d'évacuation peut être fermée, étant disposé côté filtrat dans le canal d'évacuation (28,44) pour la régénération du filtre, et que sont prévus des moyens de pression (30,43), qui, lors de l'activation, provoquent un détachement des particules de substances solides déposées sur les parois du filtre, situées côté entrée, par le fait que, lorsque l'organe d'arrêt est fermé, les parois (25), situées du côté du filtrat, du filtre (24,37) sont alimentées pendant un bref laps de temps à contre courant.

2. Dispositif selon la revendication 1, caractérisé en ce que le filtre (24) est disposé dans le récipient de collecte (22), qui comporte une chambre de collecte (27) des particules détachées, que le filtre est alimenté, du côté extérieur, par de l'eau polluée et qu'une partie inférieure du récipient de collecte (22) forme, avec le fond du récipient, la chambre de collecte (27) des particules de substances solides.

3. Dispositif suivant la revendication 2, caractérisé par le fait que dans l'espace délimité par les parois intérieures (25) du filtre (24) et un couvercle (23) du récipient de collecte (22), de préférence sur le couvercle (23) lui-même, est disposé un générateur d'ultrasons (26), qui est activé lorsque le filtre reçoit une certaine quantité de particules de substances solides.

4. Dispositif suivant la revendication 1, caractérisé par le fait qu'il est prévu comme organe d'arrêt (29) et/ou moyen de pression (30), un tuyau souple pouvant être comprimé et qui forme au moins une partie du canal d'évacuation (28), et que le tuyau peut être comprimé en deux étapes, avec obtention, lors de la première étape, d'une fermeture du canal d'évacuation (28), et lors de la seconde étape, du contre courant.

5. Dispositif suivant la revendication 1 ou 4, caractérisé par le fait que des moyens (47, 48) servant à introduire, de façon dosée, un agent désinfectant sont prévus dans la partie de canalisation un contre courant.

6. Dispositif suivant l'une des revendications 1 à 5, caractérisé par le fait que dans les voies de guidage de l'eau polluée, sont disposés, en amont de l'entrée dans le filtre (24,34), des moyens de pression supplémentaires (31,32), par lesquels est obtenue une augmentation de la pression de l'eau polluée circulante.

7. Dispositif suivant la revendication 6, caractérisé par le fait qu'il est prévu un ou plusieurs capteurs (41,42; 58,59), qui signalent une augmentation de la pression et/ou la présence de liquide ces capteurs envoyant au moins un signal indicateur pour une valeur donnée à l'avance, qui correspond à une valeur limite pour une perméabilité minimale du filtre.

8. Dispositif suivant la revendication 7, caractérisé par le fait que dans le canal s'étendant entre la source d'eau polluée et le filtre (37) est prévu une chambre de commande (33), qui reçoit un volume déterminé d'eau polluée circulante et que les capteurs (41,42) mettent en action une vanne (39,40) qui, lorsque la chambre de commande (33) est pleine, interrompt l'arrivée d'eau polluée, et une vanne (32) qui alimente la chambre de commande en un fluide comprimé, de préférence en air comprimé.

9. Dispositif suivant la revendication 8, caractérisé par le fait que la chambre de commande est formée par un récipient à sédimentation, qui comporte des moyens pour calmer l'eau polluée affluente et provoquer le dépôt des particules de substances solides sous l'action de la force de pesanteur.

10. Dispositif suivant l'une des revendications 1 à 9, caractérisé par le fait que dans le canal s'étendant entre le filtre (24,37) et l'évacuation (14,44) est présent un dispositif à capteurs (60 à 68), qui détecte l'afflux de particules de substances solides dans le filtrat.

11. Dispositif suivant la revendication 10, caractérisé par le fait que le dispositif à capteurs contient une source lumineux (60), par laquelle une zone définie peut être éclairée dans le canal (62) à contrôler, et qu'en outre dans le canal (62) est prévu un détecteur de lumière (63), qui détecte une lumière diffuse émanant des particules se trouvant dans la zone éclairée, les signaux ainsi formés étant envoyés à un dispositif d'exploitation.
